# EUROPEAN PATENT SPECIFICATION

(11) **EP 0 745 345 B1**
(45) Date of publication and mention of the grant of the patent: **03.02.1999**
(21) Application number: 96201492.4
(22) Date of filing: 31.05.1996
(51) Int. Cl.: A47J 37/12

(54) **Device for deep-frying**
Fritiergerät
Friteuse

(30) Priority: 31.05.1995 NL 1000462
(43) Date of publication of application: 04.12.1996
(73) Proprietor: Hegro B.V., 3442 AC Woerden (NL)
(72) Inventor: Hellema, Johannes Hendrikus, 3448 DN Woerden (NL)
(74) Representative: Bakker, Gilles Egbert, Ir.

(56) References cited:
- EP-A- 0 125 750
- FR-A- 2 514 474
- FR-A- 2 570 942
- GB-A- 2 098 465
- NL-A- 9 101 807
- US-A- 5 417 202

## Description

The invention relates to a deep fat frying device which includes a fat reservoir, that has a heating section with one or several sloping bottom parts and a frying section, the reservoir being provided with two hollow conduction members positioned symmetric to a centre plane through the reservoir, consisting of interconnected elements, with ducts through which combustion gases originating from the combustion chamber can be passed to the conduction members, and further ducts to pass the combustion gases from the conduction members to an exhaust, the frying device further comprising one or more heating devices to heat the fat, which are situated in a combustion chamber beneath the reservoir.

A similar frying device is known from GB-A-2098465. With this known device very hot combustion gases from the heating device are directly led through a single duct through the fat in the reservoir, with the risk of locally overheating the fat. This will result in that part of the fat will be burned and thus wasted. After passing the single duct the partly cooled gases are passed through channels fitted against the outside of the reservoir, having only one side in contact with the fat in the reservoir, resulting in a restricted heat transfer from the combustion gases to the fat.

The invention aims at meeting these disadvantages and to provide a deep fat frying device with a better heat transfer, without the risk of locally overheating the fat and with which the temperature of the fat can be quickly raised to the predetermined temperature. A further aim of the invention is to keep the drop in temperature of the fat during frying as low as possible. A frying device fulfilling these requirements is described in claim 1, other preferred features are described in dependent claims 2-4.

With the frying device according to the invention the fat is brought into a round going flow in each halve of the reservoir, with a downward directed part alongside the walls and upward directed parts in the middle of the reservoir and between the conduction members. From NL-A-91.01807, in the name of the applicant, a frying device is known, also with a round going flow in the fat.

However with this frying device the combustion gases do not pass through the conduction members. Here the conduction members are for instance filled with sand as to have a great heat capacity, and are meant to have a buffer function. However, since the temperature of the conduction members will also fall below the desired temperature of the frying fat, both the fat and the conduction member have to be heated up to temperature, resulting in that the aimed at intended quick recovery of temperature of the fat not being realized.

According to the invention two conduction members are applied, in order for the construction to be symmetrical with respect to the central axis. The burner or burners are placed under the sloping bottom parts of the fat reservoir. It is possible to have the burners run along almost the complete length of the fat reservoir, but preferably it is provided for the burner or burners to be situated symmetrically with respect to the centre of the fat reservoir. When ducts are placed at both sides of the combustion chamber running to the conduction members, the course of the combustion gases is symmetrical and for all combustion gas almost the same, enabling the reduction of CO-formation.

A conduction member consisting of two elements which are placed at a distance from each other is advantageous in that two upward flows of heated fat arise, namely one flow between the wall of the fat reservoir and a first element and one current between the first element and the second element. According to the invention it is then provided for that the current between the wall and the first element to be passed via a conductor at first a certain distance upward and subsequently to be deflected to the centre of the fat reservoir. When applying two conduction members, four flows of heated fat towards the product to be fried result, that is two high located flows from the wall to the centre and two flows straight upward between the respective elements at both sides of the central axis of the reservoir.

Because of the much greater heating surface that is obtained with the construction according to the invention, the useful effect of the burner is much greater than that of the known deep fat frying devices. When applying a comparatively, slightly larger burner the deep fat fryer according to the invention can replace two conventional deep fat frying devices.

In order to be able to accurately control the temperature of the fat the invention further provides for an electronic thermostat. The temperature of the fat should not be too high since the product to be fried could then burn, but also not too low, since that would result in the absorbtion of the fat by the product. The temperature therefore should preferably be kept within as small a range as possible, which results in a better product and in the fat to last longer.

The known deep fat frying devices are provided with a thermostat control that turns off the burner when the desired temperature is reached, however, a considerable shoot-through of the temperature then occurs. Also known is a thermostat control to be used within a temperature range close to the desired temperature, where the burner is turned on when the temperature begins to drop and turned off as soon as it begins to rise again. With this control the temperature hardly ever shoots through, but it takes relatively long before the desired temperature is reached.

According to the invention an adapted PID control is provided for, a proportional, integrating and differentiating control. A first adaptation is that the integrating effect is turned off and that the proportional part of the control is time-proportional.

The invention provides for a further adaptation with which the PD control can be damped to a certain degree, resulting in the possibility to adjust the control over a range having as extremes the known quick control with a great temperature shoot-through on the one hand and the known slow control with hardly any or no shoot-through of the temperature on the other hand.

The PD control according to the invention is mainly effective after the initial stage of the frying cycle when the heat supply has to be slowly lowered. In the initial stage the heating demand is greatest because the products to be fried enter the frying device in cooled or frozen state, to which should be added that some time is needed before the burner is activated and the heat reaches the fat. In order then to prevent that in the initial stage too much of a drop of temperature occurs, means are provided according to the invention with which during a previously determined period outside of the PD control the burners can be initiated. Following this previously determined period the product to be fried can be put in and the PD control comes into operation.

This not only keeps the drop of temperature at a minimum, it also shortens the time to reach the desired temperature considerably. This allows for the aimed at temperature to be set at a lower level then with deep fat frying devices having the known thermostat controls, with which the aimed at temperature has clearly to be set at a higher level in order to prevent too low a minimum temperature resulting from the great temperature drop.

Finally a correction is provided for the length of time between the moment the burner is given a signal and the ignition of the burner caused by this signal. Without this correction the period the burner is on, within a cycle of the time-proportional part of the control, is shorter then the period calculated for. The invention provides for means with which the on-signal for the burner is lengthened during a period equal to the period that passes between giving the on-signal and the actual ignition of the burner.

The invention therefore provides for a deep fat frying device, with which a much better heat transmission is obtained then with the known deep fat frying devices. In combination with the temperature control adapted for deep fat frying devices according to the invention, a deep fat frying device is provided for which, by means of a relatively small temperature drop during the frying cycle, the working temperature can be kept lower then with known deem fat frying devices, resulting in the frying fat to last longer. Lastly it is possible to fry faster because of the increased efficiency, so that with a slightly larger burner the device according to the invention can generally replace two conventional deep fat frying devices.

In the following the invention is further elucidated on hand of the drawing, in which:
fig.1 shows schematically a cross-section of the deep fat frying device according to the invention;
fig.2 shows schematically a plan view of the deep fat frying device according to the invention;
fig.3 shows schematically a perspective view of a preferential embodiment of the conduction members;
fig.4 shows schematically a perspective view of a next example of an embodiment of the conduction members; and
fig.5 shows schematically a perspective view of a further example of an embodiment of the conduction members.

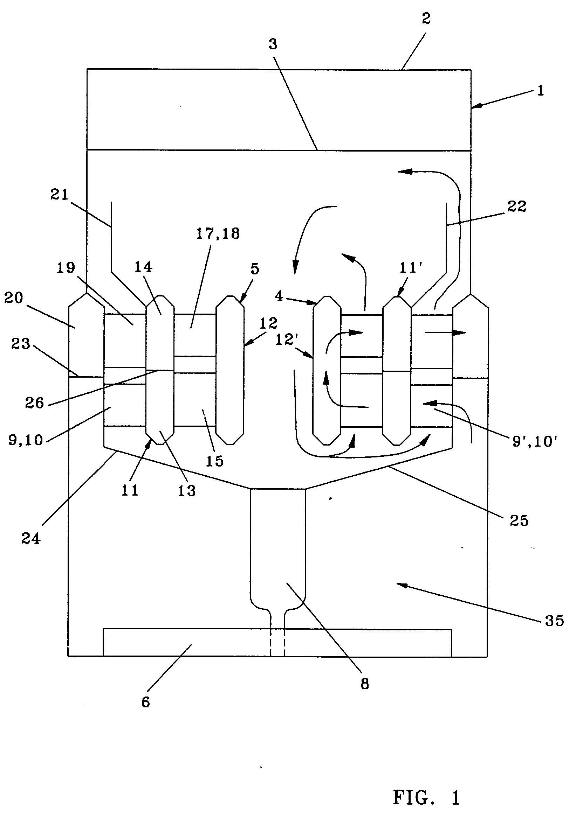

In fig.1 is indicated by 1 the deep fat frying device with an fat reservoir, in which the fat level is indicated by 3. In the lower part of the reservoir 2 are placed the conduction members 4,5 which are connected to the combustion chamber 35 and an exhaust channel by means of ducts to be described more precisely. In the combustion chamber a burner 6 is placed, which is preferably a premix-burner. By 8 is indicated a crumble receptacle.

In the following, the path of the combustion gases is described for convenience sake only for the left-hand half, however it must be clear that this is the mirror image of the right-hand half. Combustion gases originating from the burner 6 go up via the sloping bottom part 24 to the ducts 9,10 via which the gases arrive in the lower half 13 of the first element 11 which is divided by means of a dividing wall 26 into two sections. From the lower half 13 the gases via a duct 15 that is located at the centre, go to the second element 12, from where the gases flow via ducts 17,18 that are located at the upper side near the edges, to the upper half 14 of the first element 11 to finally flow again via the duct 19 that is located at the centre, to a channel 20 which runs to an exhaust which is not further indicated. The channel 20 is separated by a wall 23 from the combustion chamber.

The gas flows, as well as the liquid flows in the reservoir, are indicated by arrows. Above the combustion members 4,5 are placed conductors 21,22 intended to direct the flow between the first elements 11,11' and the wall of the reservoir upwards and deflect them towards the centre. The flow between the first element 11,11' and the second element 12,12' goes straight up.

The elements 11,11',12,12' can serve a further purpose during frying in supporting the wire baskets used in deep fat frying.

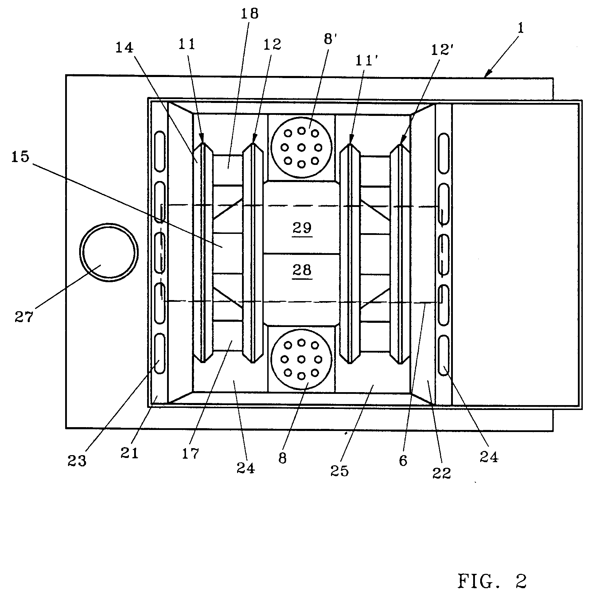

Fig.2 shows a plan view of the deep fat frying device according to the invention. Clearly visible are the conductors 21, 22 which are provided at the upper side with flow-through openings 23, 24. The ducts 17,18 are located near the sides of the second element and the duct 15 intended for the supply to the second element in the centre.

Further, at each side of the reservoir a crumble receptacle 8,8' is placed. The choice for the location is prompted by the placement of the crumble receptacle being most useful in a relatively cold zone, where hardly any or no upward flow takes place. In the device according to the invention the burner 6 is placed symmetrically with respect to the centre in order to thus obtain also a symmetrical combustion gas flow from the burners towards the ducts 9,10 and 9',10'. Therefore the crumble receptacle had to be moved from its usual location in the centre to the locations at the sides.

The bottom of the reservoir has, besides the sloping bottom parts 24,25 and connected thereto, another two sloping parts 28,29, causing the crumble catchers 8,8' to be both located at the lowest point, formed by the surrounding wall parts.

A possible other construction for this is to extend the sloping parts 28,29 till near the sides and then shape them into narrow gutters that are located deeper. These narrow gutters stretch along the length of the sides and have preferably such a course that the tap points of the gutters can be placed near the front side of the device.

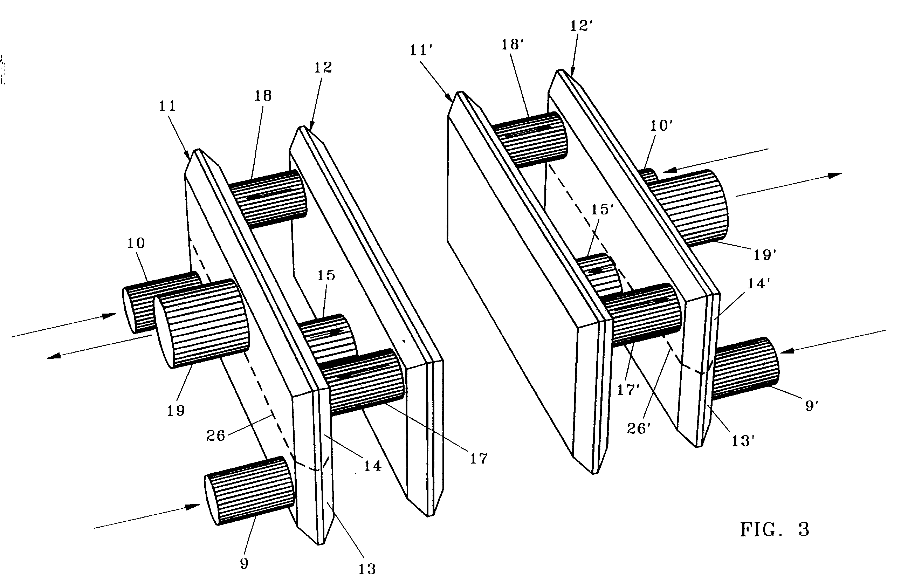

Fig.3 gives a perspective view of the conduction members according to fig.1 and 2, which clearly reveals the construction and location of the conduits. The gas flow through ducts 9,10 passes in the lower half 13 to the centre to duct 15, from where it spreads over the whole width of the element 12 and goes up to the ducts 17,18. In the upper half 14 it goes subsequently again to the centre, to duct 19.

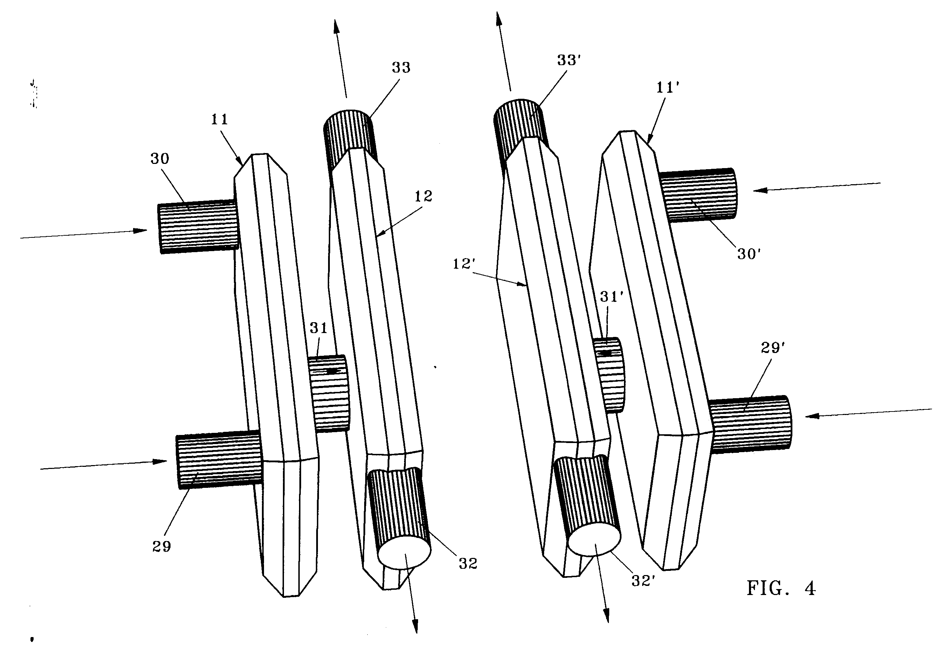

Fig.4 shows again the conduction members 4, 5 with the elements 11,12,11',12', where the ducts are placed such that the gas flow through the conduction member is counter to the liquid flow around the conduction member, as a result of which at the end of the trajectory just before it comes into contact with the product to be fried the fat receives heat of the gas with the highest temperature . Via the ducts 29,30 the gas flows via the element 11, duct 31 to the element 12. In the upper half of element 12 the gas flows sideways via the ducts 32,33 to an exhaust channel that is not further indicated.

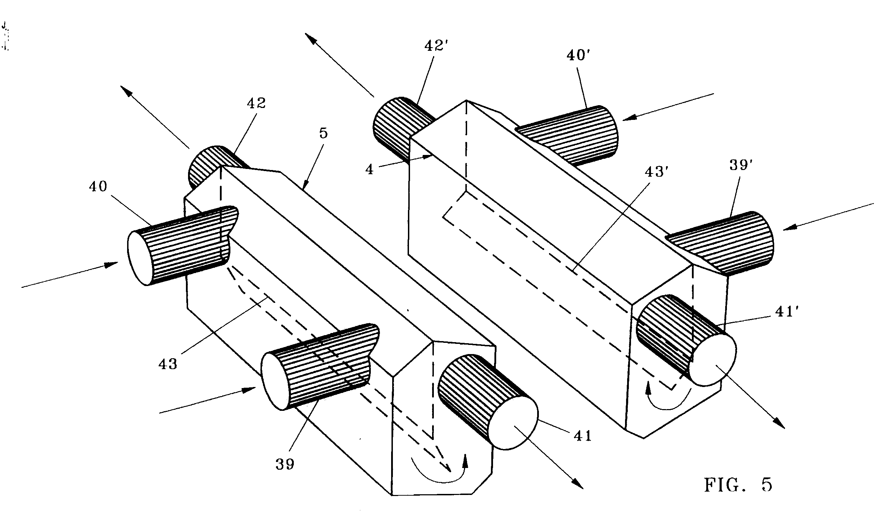

In fig.5 finally another example of an embodiment is given, in which the conduction member consists of one element which is however by an internal substantially vertical wall 43 divided into two sections. In the lower part of the wall not further indicated openings are made, preferably near the centre, such that a flow is realized, which is conform the flow in fig.4. Therefore, via the ducts 39,40 inwards and via the ducts 41,42 to a not further indicated exhaust channel.

## Claims

1. Deep fat frying device which includes a fat reservoir, that has a heating section with one or several sloping bottom parts and a frying section, the reservoir being provided with two hollow conduction members positioned symmetric to a centre plane through the reservoir, consisting of interconnected elements, with ducts through which combustion gases originating from the combustion chamber can be passed to the conduction members, and further ducts to pass the combustion gases from the conduction members to an exhaust, the frying device further comprising one or more heating devices to heat the fat, which are situated in a combustion chamber beneath the reservoir, **characterized in that** the elements of the conduction members are placed substantially vertical in the heating section of the reservoir, that each conduction member consists of two elements, the thickness of the elements is considerably smaller than the length and width of the elements, the first element of which, situated near the wall of the combustion chamber, is divided with a dividing wall into a lower and an upper half, and where the ducts are placed such that the combustion gases are passed via the lower half of the first element, to the lower half of the second element and via the upper half of the second element to the upper half of the first element and via the upper half of the first element to the exhaust.

2. Deep fat frying device according to claim 1, **characterized in that** means are provided for the combustion gases to be passed under a pressure that deviates from the atmospheric pressure through the assembly of ducts and conduction members.

3. Deep fat frying device according to claim 2, **characterized in that** a premix-burner is provided for, where the gas-air mixture is passed under pressure through the burner, and the combustion chamber comes under pressure.

4. Deep fat frying device according to any of claims 1-3 including a thermostat device to control the temperature of the fat, whereby the thermostat device is a time-proportional thermostat comprising proportional and differentiator control means, giving a control signal to the heating device(s), that further control means are provided for to control the heating device(s) independent from the thermostat device for a predetermined period of time, and that control signal drop-out delay means are provided for to extend the duration of the control signal from the thermostatic device to the heating device(s) for a period of time equal to the time interval between the generation of the control signal and the ignition of the heating device(s).

## Patentansprüche

1. Fritiergerät, welches einen Fettbehälter enthält, der einen Heizraum mit einem oder mehreren schrägen Bodenteilen und einen Fritierraum hat, der Behälter ist mit zwei hohlen Leitungskörpern versehen, welche symmetrisch zu einer Mittelfläche dem Behälter hindurch gelegen sind, bestehend aus gegenseitig verbundenen Elementen mit Kanälen wodurch Verbrennungsgase herkommend vom Verbrennungsraum zu den Leitungskörpern geführt werden können und weitere Kanäle angeordnet sind um die Verbrennungsgase von den Leitungskörpern zu einer Abfuhr zu führen, weiter enthält das Fritiergerät eine oder mehrere Heizvorrichtungen zur Heizung des Fettes, welche Vorrichtungen in einem Verbrennungsraum unter dem Behälter angeordnet sind, **dadurch gekennzeichnet,** dass die Elemente der Leitungskörper hauptsächlich senkrecht im Heizraum des Behälters angeordnet sind, dass jeder Leitungskörper aus zwei Elementen besteht, wobei die Dicke der Elemente bedeutend kleiner ist als die Länge und Breite der Elemente, wobei das erste Element liegend in der Nähe der Wand des Verbrennungsraums mittels einer Trennungswand in einer unteren und oberen Hälfte getrennt ist und wobei die Kanäle derart angeordnet sind dass die Verbrennungsgase via die untere Hälfte des ersten Elements zu der unteren Hälfte des zweiten Elements und via die obere Hälfte des zweiten Elements zu der oberen Hälfte des ersten Elements geführt werden und via die obere Hälfte des ersten Elements zu einer Abfuhr.

2. Fritiergerät nach Anspruch 1, **dadurch gekennzeichnet,** dass Mittel anwesend sind um die Verbrennungsgase unter einen vom atmosphärischen Druck abweichenden Druck durch die Konstruktion von Kanälen und Leitungskörpern zu führen.

3. Fritiergerät nach Anspruch 2, **dadurch gekennzeichnet**, dass ein Vormisch-Brenner anwesend is, wobei die Gas-Luftmischung under Druck den Brenner hindurch geführt wird, und der Verbrennungsraum unter Druck kommt.

4. Fritiergerät nach einem der Ansprüche 1-3, einschliesslich eine Thermostatvorrichtung zur Regelung der Fett-Temperatur, wobei die Thermostatvorrichtung einen Zeit-Proportional-Thermostat ist, der proportionale und differenzierende Regelungsmittel enthält, und der ein Regelsignal an dem (den) Heizgerät(en) gibt, dass weitere Regelmittel vorgesehen sind für die Regelung der Heizgeräte unabhängig der Thermostatvorrichtung für einen vorabstimmten Zeitraum und dass Verspätungsmittel zur Verspätung des Ausfalls des Regelsignals anwesend sind zur Verlängerung der Dauer des Regelsignals vom Thermostatvorrichtung zur Heizgerät(en) für einen Zeitraum gleich am Zeitintervall zwischen der Generation des Kontrollsignals und der Ignation des (der) Heizgerät(e).

## Revendications

1. Friteuse qu'elle comprend une cuve de graisse ayant un espace de chauffage avec une ou plusieurs parties de fond inclinées et un espace de friture, la cuve est prévue des deux éléments de guidage caves, positionnés symmétrique sur un plan central traversant la cuve, constituées par des éléments connectés mutuelles, avec des canaux par lesquels des gazes à combustion originaire de l'espace de combustion peut traverser les éléments de guidage et de plus des canaux traversent les gazes à combustion à partir des éléments de guidage vers une sortie, la friteuse de plus comprend un ou plusieurs dispositifs de chauffage pour échauffer la graisse, placé dans un espace de combustion en bas de la cuve, **caractérisé en ce que** les parties des éléments de guidage sont positionnés essentiellment vertical dans l'espace de chauffage de la cuve, que chaque élément de guidage consist en deux parties, l'épaisseur des parties est considérable plus petite que la longueur et épaisseur des parties, laquelle première partie positionnée près la paroi de l'espace de combustion est divisée par une paroi séparative dans une moitié inférieure et supérieure, et où les canaux sont positionnés tellement que les gazes à combustion sont passés par la moitié inférieure de la première partie vers la moitié inférieure de la deuxième partie et par la moitié supérieure de la deuxième partie vers la moitié supérieure de la première partie et par la moitié supérieure de la première partie vers la sortie.

2. Friteuse selon la revendication 1, **caractérisé en ce que** des moyens sont présentes pour traverser les gazes de combustion sous une pression déviante de la pression atmosphérique à travers l'assemblage des canaux et des éléments de guidage.

3. Friteuse selon la revendication 2, **caracérisé en ce qu'**un brûleur de mixage préalable est présent, où le mixage de gaz-air est traversé le brûleur sous pression et l'espace de combustion revient sous pression.

4. Friteuse selon l'une des revendications 1-3 comprennant un dispositif de thermostat de régler la température de la graisse, lequel dispositif de thermostat est un thermostat de temps proportionnel comprennant des moyens de réglage proportionnels et différentiels, donnant un signal de réglage à le(s) dispositif(s) de chauffage, qu'ensuite des moyens de réglage sont prévus pour régler le(s) dispositif(s) de chauffage indépendamment du dispositif de thermostat pour une période prédéterminée, et que des moyens à retard pour retarder la chute de signal de réglage sont prévus pour prolonger la durée du signal de réglage à partir du dispositif de thermostat vers le(s) dispositif(s) de chauffage pour une durée de temps égal l'intervalle de temps entre la génération du signal de réglage et l'ignition de(s) dispositif(s) de chauffage.
